# EUROPEAN PATENT APPLICATION

(11) **EP 1 193 841 A1**
(43) Date of publication of application: **03.04.2002**
(21) Application number: 00925638.9
(22) Date of filing: 12.05.2000
(51) Int. Cl.: H02K 13/00, H02K 5/22

(54) **SMALL-SIZED MOTOR AND MOTOR HOLDER**

(30) Priority: 12.05.1999 JP 13203599
(71) Applicant: NAMIKI SEIMITSU HOUSEKI KABUSHIKI KAISHA, Tokyo 123-8511 (JP)
(72) Inventor: SUZUKI, Toshio, Namiki Seimitsu Houseki K.K., Tokyo 123-8511 (JP); KUDO, Mitsugu, Namiki Seimitsu Houseki K.K., Tokyo 123-8511 (JP); KOGAWA, Takeshi, Namiki Seimitsu Houseki K.K., Tokyo 123-8511 (JP); MORITA, Kazuo, Namiki Seimitsu Houseki K.K., Tokyo 123-8511 (JP)
(74) Representative: Kitzhofer, Thomas, Dipl.-Ing.
(86) International application number: JP0003050
(87) International publication number: WO0070726

(57) **Abstract**

A plate spring-like feeding terminal (43) of a coreless motor (1) is obliquely fixed and extended upward toward the inside. A motor holder (2) has a slope (23) going up toward the inside from an insert port (22). Thereby, the feeding terminal (43) is protruded to the outside of the slope (23) when the motor (1) is inserted into the holder (2). As a result, when the motor (1) and the holder (2) are incorporated into a portable communication terminal, the terminal (43) is pressed and electrically connected to a feeding circuit of a circuit board positioned above the terminal without any extra work such as soldering.

## Description

### FIELD OF TECHNOLOGY TO WHICH INVENTION BELONGS

This invention concerns a small motor that can be fitted easily into a fitting in equipment, and a motor holder that holds it.

### BACKGROUND OF INVENTION

In recent years, a silent, vibratory ringing method ("vibration call"), which does not disturb others in the event of an incoming call, has been noted in portable communications terminals such as pagers and portable telephones. As a consequence, there has been improvement of very small-diameter, that are small and well-suited as the source of the ring vibration in portable communications terminals.

For example, the small, cylindrical coreless motor 7 in figure 9 is known as an example of this kind of small motor. This coreless motor 7 comprises a magnetic power unit 3, which rotates an eccentric weight 5 by rotation of the main shaft, and a power-feed unit 8 that transmits electric power to the power unit 3.

The power unit 3 has a cylindrical coil 31 wound in cylindrical shape and a rotor shaft 32 that passes through the center of the cylindrical coil 31, the cylindrical coil 31 being fixed to the rotor shaft 32. At one end a commutator element 34 made up primarily of multiple commutators is molded as a unit with a fixture 33. The rotor, which comprises these parts, is accommodated inside the gaps of a roughly cylindrical housing case 36 such that the rotor shaft passes through the central cavity of a cylindrical field magnet 35 that is fixed in inside the housing case 36, and the cylindrical coil 31 of the concentric rotor surrounds the field magnet 35.

The rotor shaft 32 is supported, free to turn, by a bearing 37 at the tip of the housing case 36 and a bearing 38 at the other end, and the eccentric weight 5 is fixed to and supported by the tip of the shaft which passes through a spacer 90.

The power-feed unit 8 has a polymer brush stage 81 that is fitted to the inner wall of the housing case 36, and a set of brushes 82, 82 that is set so that the open ends face opposite directions on the brush stage 81. The conductive terminals of this set of brushes 82, 82 are connected by two lead wires 83 to the circuit board that controls the motor, or to the power source. The commutator element 34 at one end of the rotor shaft 32 is inserted between the set of brushes 82, 82 by flexing the brushes 82, 82 and pushing them apart.

That is, the coreless motor 7 is a motor that rotates with the rotor driven by induction power and the magnetic repulsion between the field of the field magnet 35, a permanent magnet, and the field generated by the wound cylindrical coil 31 that is powered through the commutator element 34, the brushes 82 ... and the leads 83 from the power source of the circuit board. Because the motor's center of gravity moves in accordance with the rotation of the eccentric weight 5 fixed to the rotor shaft, the coreless motor 7 itself generates vibrations.

Nevertheless, when the coreless motor 7 described above is installed, it is normally fixed to the case of a portable communications terminal or other electronic equipment using a flat cushion, or by some part external to the motor housing by means of a mechanical method, after which the leads must be soldered to terminals on the circuit board, or else special connecters must be attached to the tips of the leads 83 and then connected by clamping in a socket on the circuit board.

Consequently, to attach the coreless motor 7, extra work processes are required to fix it to the portable terminal case, and to solder the leads 83 or to attach connectors and connect them, and so assembly in the portable terminal case is troublesome.

Moreover, there are problems of structure, shape and attachment operability for the case of the coreless motor 7 itself, and wiring space is needed for attachment of the leads 83 to the circuit board; these are disadvantages in regard to the compactness and simplicity of assembly of the portable electronic equipment.

Accordingly, this invention has the purpose of providing a small motor, with motor holder, that is suitable as a source of vibration for ringing a portable communications terminal or other electronic equipment, that is easily attached to the communications terminal case, and that is useful for reducing the size of the electronic equipment as a whole and for simplification (automation) of assembly.

### OVERVIEW OF INVENTION

This invention is a small motor for use in a portable communications electronic terminal, the small motor having an eccentric weight attached to the rotor shaft and having a motor holder in which it is held by means of insertion into the insertion opening, in which small motor there are flexible power feed terminals that feed power to the motor from the circuit board or another external unit, the power-feed terminals being located on the outer periphery of the cylindrical housing case of the motor, such that the fixed ends of the power-feed terminals are positioned centrally along the length of the cylinder from the outward end of the power-feed unit that is fixed and connected to one end of the cylindrical housing case, and the fixed ends are located inward from the free ends and toward the insertion opening end, such that at the time of insertion in the motor holder, the open ends of the power-feed terminals extend outward from the insertion opening end.

In the small motor of this invention, the fixed ends of the power-feed terminals are positioned at the insertion opening end of the motor holder near the inner circumference and closer to the central axis than the free ends. Consequently, if the free ends are positioned sufficiently outward, when the small motor is inserted into the motor holder, the free ends extend outward from the motor holder, their resilience is increased and the pressure against the circuit board increases.

Even if the free end is positioned inward from some part other than the insertion opening of the motor holder, the power-feed terminal has elasticity, and so when the small motor is inserted into the motor holder, the gap of the fixed end is opened outward by the pressure on the power-feed terminal from the slope from the insertion opening end, so that the free end extends outward from the motor holder and the resilience is increased.

Accordingly, the layout of the various components of the electronic equipment and the circuitry of the circuit board are designed so that assembly of the power-feed terminals of the small motor and the power-feed circuit on the circuit board creates contact pressure in the desired location, with the result that the power-feed terminals can easily conduct power from the power-feed circuit just by assembly of the motor, the motor holder and the circuit board in the portable electronic equipment case, and that there is no need for lead handling or for a special connection operation such as soldering.

When pieces of metal in the form of leaf springs, for example, are attached at an angle as the power-feed terminals, even if the fixed ends are positioned inward, at some point other than the insertion opening of the motor holder, the insertion operation can be performed smoothly if a gap between the lower side of the power-feed terminals and the outer circumference of the housing case is pushed open by the edge of the insertion opening.

Because the free ends of the power-feed terminals are positioned on the insertion opening side of the fixed ends, the length of the motor holder in the direction of insertion is shorter than the total length of the motor, and is the same when it is holding a small motor as when it is not holding a small motor, and so the space in the direction of the length required for installation of the small motor can be less than with the conventional product, and the electronic equipment can be made smaller than the conventional product.

Because the contact portions of the flexible open ends of the power-feed terminals extend from one end of the motor housing and are positioned almost over the center of the cylinder, when the motor holder and the motor are sandwiched between the circuit board and the case, the position of connection of the power-feed terminals nearly matches the center of gravity of the motor in the direction of compression, so that the motor is fixed stably with respect to the case.

Now, it is preferable that this small motor be constituted with projections on the outside of the free ends of the power-feed terminals in order to improve the contact pressure with respect to the external board. In such a case, the contact pressure between the open ends and the power-feed circuitry or another external part is improved, and so the reliability of the connection between the terminals and the external part is improved.

In this invention, it is preferable to apply metal plating to at least the free ends of the power-feed terminals in order to reduce the contact resistance of the power-feed terminals.

In the motor holder of this invention, which has an insertion opening for insertion of the small motor and a central cavity to hold the small motor inserted through the insertion opening, there is at least one part adjacent to the insertion opening that can push the power-feed terminals upward and outward when in contact with the power-feed terminals during insertion of the small motor.

By means of this invention, the insertion part can push the power-feed terminals upward and outward when the small motor is inserted into the motor holder, and so it is possible to produce a motor holder that is optimal as a motor holder for small motors.

In the motor holder of this invention, the insertion part is one part adjacent to the insertion opening, and preferably takes the shape of a slope upward from a point lower than the free ends of the power-feed terminals.

In this case, the power-feed terminals of the small motor project outward from the insertion part of the motor holder, and so when the part adjacent to the insertion opening is sandwiched in between and the power-feed terminals are assembled within the electronic equipment, the power-feed terminals are flexibly deformed by the circuit board.

In other words, the contact pressure between the power-feed terminals and the power-feed circuitry of the circuit board is higher because of the resilience of the power-feed terminals and the use of the slope of the motor holder. Consequently, the reliability of the connection between the terminals and the external part is improved.

The motor holder of this invention is preferably made of an elastic material. By that means, when the small motor, the motor holder and the circuit board are assembled in the electronic equipment case and make contact, the motor holder also applies pressure against the circuit board, and that resilience enables sufficiently high contact pressure between the power-feed terminals and the power-feed circuitry or other external circuit board. Accordingly, the reliability of the connection between the power-feed terminals and the external part is improved.

Any general-purpose polymer such as synthetic rubber or urethane can be used as the elastic material, but there is no particular limit as long as the material can be press molded or extrusion molded. It is preferable that the motor holder be easily molded and usable as a part in electronic equipment.

It is preferable that the motor holder of this invention be made of an insulating material. In that way, there is no possibility of the power-feed terminals conducting power to other parts of the small motor when the small motor, the motor holder and the circuit board are assembled in the electronic equipment case and make contact, and so the insulation reliability of the small motor is improved.

When the power-feed terminals of the small motor held in the motor holder of this invention is pressed down and inward, at the position contacted by the backs of the projections on the free ends there is a peak that pushes the free ends back upward and outward.

In this invention, the force of contact pressure when the small motor, motor holder and circuit board are assembled in the electronic equipment case is concentrated at the peak of the motor case, and so the contact reliability of the power-feed terminals with the external part is improved.

### BRIEF EXPLANATION OF DRAWINGS

Figure 1 is a schematic top view to explain the constitution of the coreless motor 1 in one implementation of this invention.

Figure 2 is a schematic front view to explain the constitution of the coreless motor 1.

Figure 3 is a drawing to explain the constitution of the power-feed unit 4, which is a constituent element of the coreless motor 1.

Figure 4 is a schematic top view to explain the constitution of the motor holder 2.

Figure 5 is a schematic front view to explain the constitution of the motor holder 2.

Figure 6 is a schematic oblique view to explain the installation of the coreless motor 1 and the motor holder 2 in the portable communications terminal 6.

Figure 7 is a schematic top view to explain the state of the motor holder 2 while holding the coreless motor 1 within it.

Figure 8 is a schematic front view to explain the state of the motor holder 2 while holding the coreless motor 1 within it.

Figure 9 is an exploded oblique view to explain the constitution of the coreless motor 7 of a conventional implementation.

### OPTIMUM MODE FOR IMPLEMENTATION OF THE INVENTION

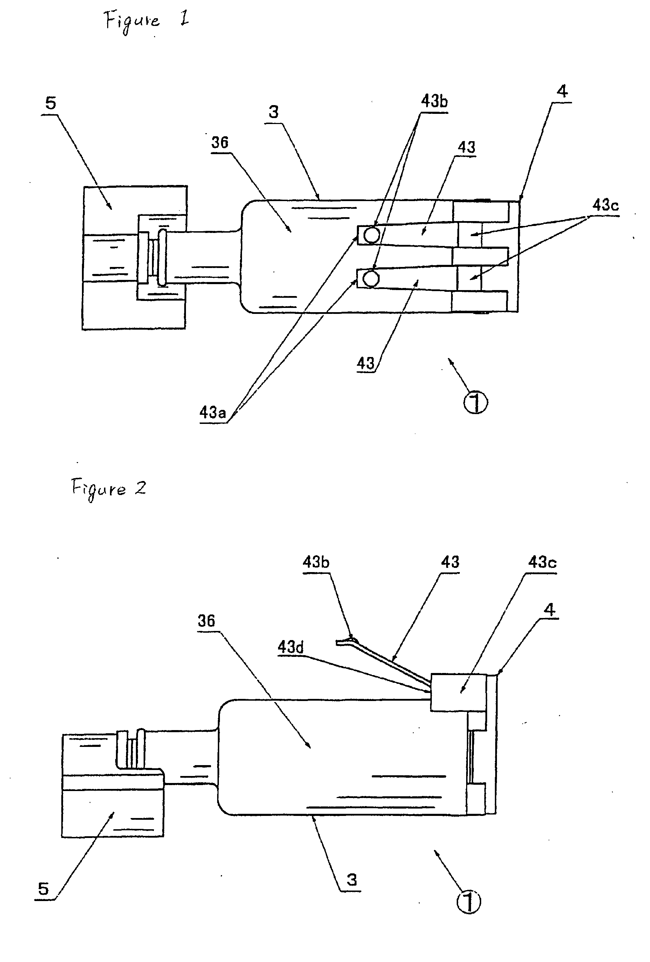

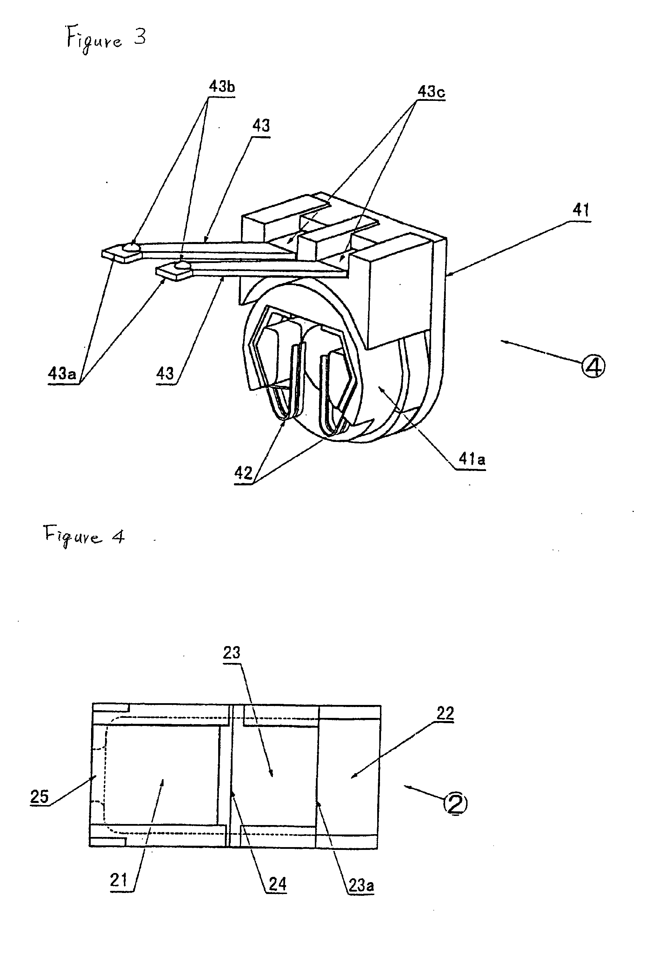

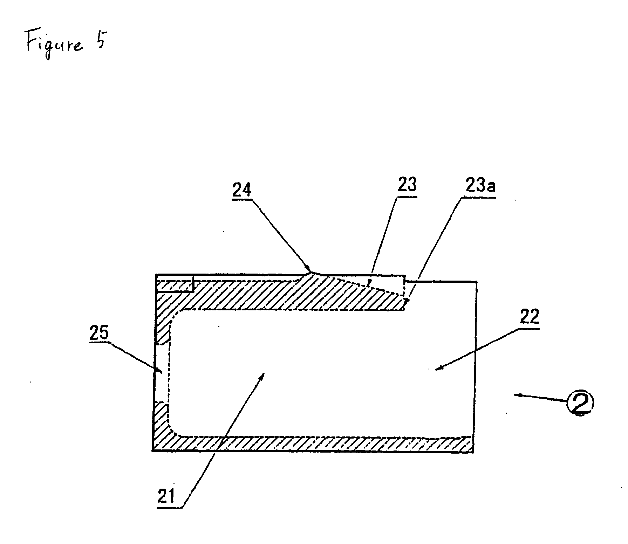

A detailed explanation of the coreless motor 1 and the motor holder 2 which are one example of implementation of this invention is given below, with reference to figures 1 through 8. Figures 1 and 2 are schematic top and front views to explain the constitution of the coreless motor 1 in one implementation of this invention. Figure 3 is a drawing to explain the constitution of the power-feed unit 4, which is a constituent element of the coreless motor 1. Figures 4 and 5 are schematic top and front views to explain the constitution of the motor holder 2.

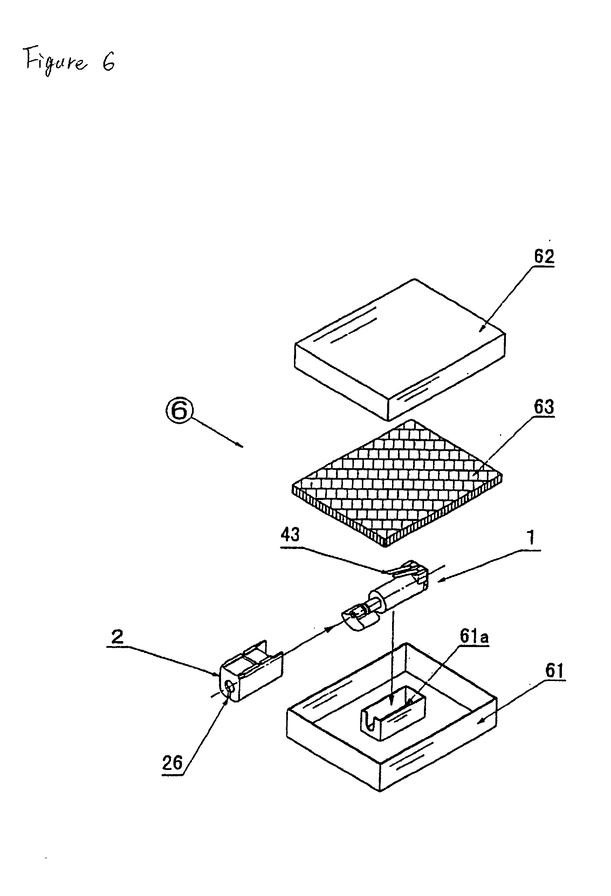

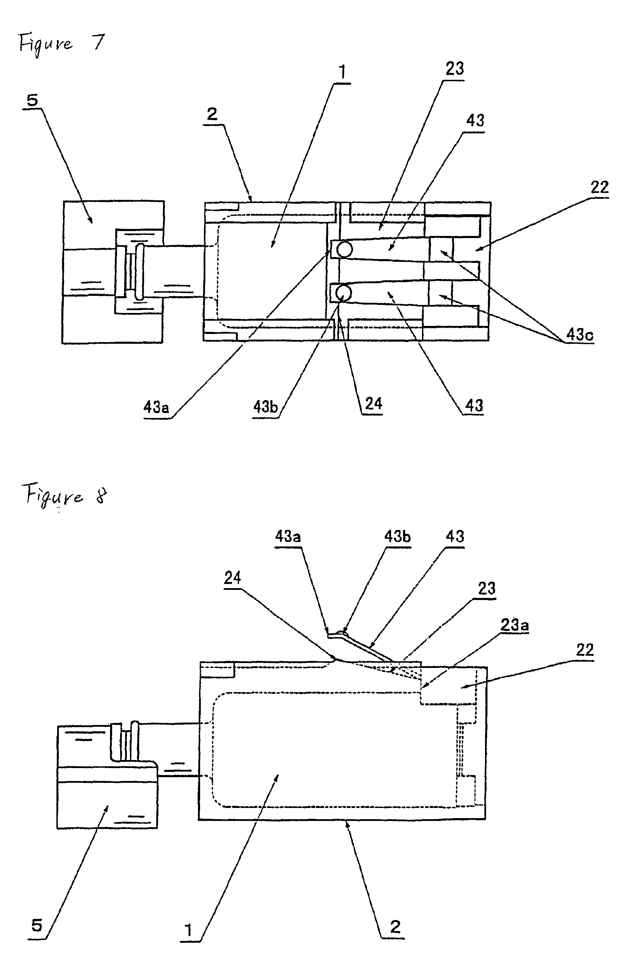

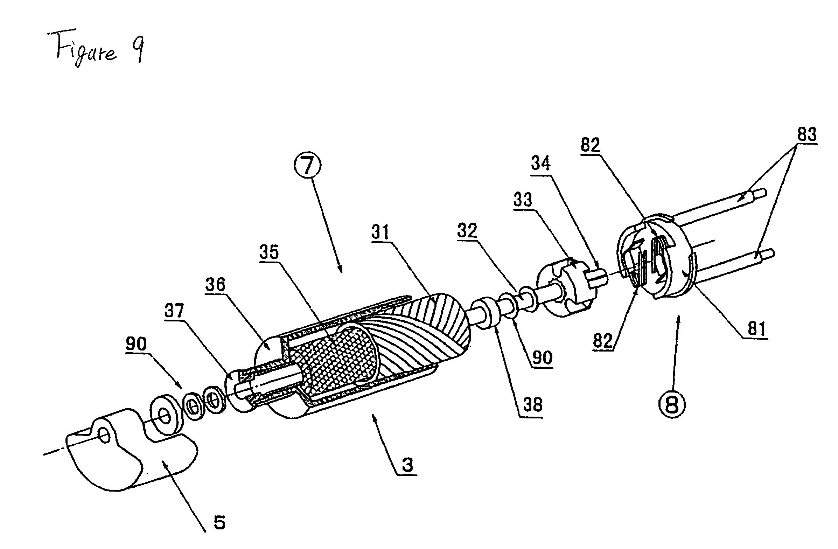

Figure 6 is a schematic oblique view to explain the installation of the coreless motor 1 and the motor holder 2 in the portable communications terminal 6. Figures 7 and 8 are schematic top and front views to explain the state of the motor holder 2 while holding the coreless motor 1 within it.

The structure of the motor 1 and the motor holder 2 will be explained first. As shown in figures 1 and 2, the motor 1 has, as a structure to rotate an eccentric weight 5, a power unit 3 and a power-feed unit 4 that supplies electrical power to the power unit 3. That is, the coreless motor 1 of this invention comprises essentially the same units as the conventional coreless motor 7, but instead of the power-feed unit 8 with leads shaped as described above, it employs the terminals of a new power-feed unit 4.

That is, as shown in figure 3 the power-feed unit 4 comprises a brush stage 41, a pair of brushes 42 that is placed so as to face each other in direct opposition, and two power-feed terminals 43 that connect the two brushes 42 to the circuit board. The commutator element 34 that is on one end of the rotor shaft 32 of the rotor is inserted between the pair of brushes 42 as the two brushes 42 are flexibly deformed to make room.

The power-feed terminals 43 are preferable of metal sheet in the form of leaf springs, but they could be bars. Their surface is metal-plated on the tip in order to reduce contact resistance. In greater detail, the free ends 43a of the leaf spring power-feed terminals 43 have, on their upper faces, rounded projections 43b, and each free end 43a is bent at the point of the projection 43 b with the outside of the bend facing the housing case side. The fixed ends 43c are fixed to 43c [sic], which is part of the side face 41a of the brush stage 41. From the side face 41a, the power-feed terminals 43 extend along the length of the motor; they are bent at the point of connection and slant upward toward the case.

The angle of installation of the power-feed terminal 43 can be about the same as the angle of the slope 23, to be described in more detail hereafter, but a slightly greater angle is preferable.

The bent-back portions of the free ends 43a are nearly parallel with the side face 41a in figure 3, but the design consideration is that the angle not be such that the tip of the terminal would contact the circuit board too sharply. Further, the length of the power-feed terminals 43 is designed so that, during assembly into the portable communications terminal 6 in an operation described hereafter, they will reach to the flat terminals of the power-feed circuit on the circuit board 63 of the portable communications terminal 6.

Moreover, the motor holder 2 that holds the motor 1 is made, for example, of an elastic material with insulating qualities, such as insulating rubber. As shown in figures 4 and 5, there is a central cavity 21 that holds the entire outer surface of the coreless motor 1 when it is inserted, an insertion opening 22 that is open for the insertion of the coreless motor 1, a slope 23 that is exposed to separate the power-feed terminals 43 from the outside of the motor holder 2 when the coreless motor 1 is inserted, and an opening 25 through which the front of the rotor shaft 32 of the coreless motor 1 can project outside the motor holder 2.

So that the inner circumference of the central cavity 21 will hold the coreless motor 1 firmly, it measures roughly the same as the outside circumference of the housing case 36.

The slope 23 extends from the insertion opening 22 along the outside of the motor holder in the direction of its length. Its peak 24 (convex portion) is positioned at the highest point of contact between the motor holder and the circuit board. It is designed so that, with the coreless motor 1 held in the motor holder 2, the projections 43b reach the flat circuit terminals when the projections 43b of the power-feed terminals are pressed between the case and the circuit board.

The method of use and functioning of the coreless motor 1 and the motor holder 2 are explained next. As shown in figure 6, the coreless motor 1 is inserted in the motor holder 2 by moving them together along the central axis.

At that point, as described above, the power-feed terminals 43 are bent at an angle that is essentially equal to that of the slope 23, or slightly larger. As shown in figures 7 and 8, the power-feed terminals 43 project outside the slope 23 when the coreless motor 1 is inserted in the motor holder 2.

After the coreless motor 1 is inserted into the motor holder 2, the eccentric weight 5 is fixed to the rotor shaft 32 that projects from the opening 25. To improve operability in this invention, a slit 26 can be cut connected to the opening 25 so that the coreless motor 1 with the eccentric weight 5 already caulked onto it can be inserted easily into the motor holder 2 by means of flexible deformation of the motor holder 2.

Then, the coreless motor 1 and the motor holder 2 are normally packed into and fixed in place in a box-shaped fixture 61 that is located on a part of the inner wall of the lower case 61 of a portable telephone, pager or other portable communications terminal 6. After the circuit board 63 is fixed to either the lower case 61 or the upper case 62, the lower case 61 and the upper case 62 are assembled to form a single portable equipment case. The position of the circuit board 63 is such that the circuit paths on the lower side of the circuit board 63 and the power-feed terminals 43 on the upper side of the motor holder 2 are connected in positive and negative polarity.

As stated above, the length of the power-feed terminals 43 is designed so that they reach the power-feed circuit on the printed circuit board 63 when the portable communications terminal 6 is assembled, and so the power-feed terminals 43 will connect with the power-feed circuit on the printed circuit board 63 without requiring a special connection operation such as soldering. Because the motor holder 2 is an insulating material, the coreless motor 1 is not electrically connected to the power-feed circuit at any other point.

The power-feed terminals 43 are leaf springs, and have the projections 43b, besides which the contact portion is metal-plated; for these reasons, the contact resistance between the power-feed circuit and the power-feed terminals 43 is reduced. Further, the peak 24 of the slope 23 of the motor holder 2 is the outermost point that contacts the external circuit board, and because it is positioned so that the projections 43b will reach even when the power-reed terminals 43 are flexed, as shown in figure 8, it will increase the contact pressure, and thus the reliability of connection, between the power-feed circuit and the power-feed terminals 43.

The motor holder 2 has elasticity, and because there is contact between the power-feed circuitry of the circuit board 63 and the peak 24 of the motor holder 2, the motor holder 2 is always pushing against the circuit board, thus reinforcing the resiliency of the power-feed terminals 43 that are sandwiched between them.

Accordingly, the contact pressure between the power-feed circuit and the power-feed terminals 43 is unlikely to diminish even if there is a drop in the resilience of the power-feed terminals 43, and so the reliability of the connection can be maintained despite a shock caused by dropping the equipment.

Because the power-feed terminals 43 extend from the power-feed unit 4 outward in the direction of the cylinder axis of the coreless motor 1, the space required inside the case of the coreless motor 1 can be reduced relative to the conventional product, in regard to the traditional layout of the leads, in which the leads extended out in line with the axis. Accordingly, the size of the portable communications terminal 6 can be reduced from that of the traditional product.

Even though the coreless motor 1 vibrates greatly in accordance with the rotary movement of the eccentric weight 5, the motor is also in contact with the lower case 61 through the motor holder 2. Because of that, the vibration is transmitted only to the lower case 61, and the resilient power-feed terminals 43 transmit next to no vibration to the circuit board 63, so there is no noise such as squeaking or rattling of the circuit board.

Using the coreless motor 1 and the motor holder 2 of the example of implementation of this invention described above, the leaf-spring shaped power-feed terminals of the coreless motor 1 are fixed so as to extend outward in the direction of the cylinder axis, and there is a slope 23 on the motor holder 2 that rises on the outside surface from the insertion opening 22 toward the center, so that when the coreless motor 1 is inserted into the motor holder 2, the power-feed terminals 43 extend outward from the motor holder 2.

Therefore, when the coreless motor 1 and the motor holder 2 are assembled in a portable communications terminal, the power-feed terminals 43 and the power-feed circuitry of the circuit board that is positioned facing them are pressed into contact and can conduct without any special operation such as soldering. Moreover, there are projections 43b on the contact portions of the power-feed terminals 43, and the peak 24 of the slope 23 of the motor holder 2 is the highest and outermost point on the surface of the motor holder 2 that faces the plane of the circuit board; the motor holder 2, moreover, is an elastic material, and so the force with which the power-feed terminals 43 push upward increases, and the contact pressure between the power-feed terminals 43 and the power-feed circuitry increases. Further, because the power-feed terminals 43 are metal-plated, the contact resistance is reduced, and the reliability of conduction is increased.

Accordingly, the attachment of the coreless motor 1 and the motor holder 2 is easier than in the conventional product, and the connection reliability is quite certain. Further, the power-feed terminals 43 extend outward along the direction of the axis from the power-feed unit 4, and the space required in the coreless motor 1 is reduced in that the power-feed terminals 43 are made of a thin resilient sheet and do not increase the outer diameter of the motor holder 2 when it is set in the case, and the length can be shorter, not longer than with the conventional leads, so the portable communications terminal 6 as a whole can be reduced.

Although the motor itself vibrates along with the rotary movement of the eccentric weight 5, it contacts the lower case 61 of the portable communications equipment through the motor holder 2, and so there is no slippage between the motor and the circuit board, and the transmission is transferred only to the lower case 61. Thus little noise is produced.

Now, this invention is not limited to this example of implementation; the shape can be changed as desired within a range that does not depart from the intent of this invention. For example, the small motor of this invention is not limited to a coreless motor; a cored motor can be used, of course. And the application is not limited to the vibration source for portable communications terminals. That is, it can be used as a deceleration device by replacing the eccentric weight with a cogwheel, or as a drive power source of any desired shape by attaching an impeller or other rotor fin.

It is possible that through fluctuations during production, that the set angle of the power-feed terminals 43 will be less than the angle of the slope 23, or that the height of the free ends of the two power-feed terminals 43 will differ. Even so, as long as the thickness slope edge 23a, which is the side of the slope 23 that is a part of the insertion opening 22, is greater than the height 43d shown in figure 2, the power-feed terminals 43 will be pushed by the slope edge 23a during insertion of the coreless motor 1 into the motor holder 2, and will extend outward, thus stably achieving the same effect as this example of implementation.

As a result of this invention, as explained above, if the fixed ends of the terminals are positioned on the outer surface, the fixed ends themselves will project outside the motor holder when the small motor is inserted into the motor holder. Even if the fixed ends are positioned inward from the part that is outside the insertion opening of the motor holder, because of the flexibility of the power-feed terminals, the power-feed terminals are pushed by the insertion opening edge and open outward when the small motor is inserted into the motor holder, and so the power-feed terminals project outward from the motor holder.

Accordingly, the layout of the various components of the electronic equipment and the circuitry of the circuit board are designed so that there is contact pressure between the power-feed terminals of the small motor and the power-feed circuit on the circuit board, and so the power-feed terminals can conduct power from the power-feed circuit just by assembly of the motor, the motor holder and the circuit board in the portable electronic equipment case.

The length of the motor holder in the direction of insertion is the same when it is holding a small motor as when it is not holding a small motor, and so the space required for installation of the small motor can be less than with the conventional product. Accordingly, assembly is easier, and the portable electronic equipment can be made smaller than the conventional product.

Moreover, as a result of this invention, the contact pressure between the open ends of the terminals and external parts like the power-feed circuit is increased, and so the reliability of the connection between the terminals and the external part is improved. In addition, the contact resistance is reduced. And as a result of this invention, it is possible to produce a motor holder that is optimal as a motor holder for small motors.

As a result of this invention, the contact pressure between the power-feed terminals and external parts like the circuit board is higher because of the resilience of the power-feed terminals, and so the reliability of the connection between the terminals and the external part is improved. And as a result of this invention the contact pressure between the power-feed terminals and external parts like the power-feed circuitry is higher because of the resilience of the motor holders, and so the reliability of the connection between the terminals and the external part is improved.

As a result of this invention, there is no possibility of the power-feed terminals conducting power to other parts of the small motor when the small motor, the motor holder and the circuit board are assembled in the electronic equipment case and make contact, and so the insulation reliability of the small motor is improved. In addition, as a result of this invention, the force of contact pressure when the small motor, motor holder and circuit board are assembled in the electronic equipment case is concentrated at the peak of the motor case, and so the contact reliability of the power-feed terminals with the external part is improved.

### INDUSTRIAL UTILITY

As described above, the small motor and motor holder of this invention are well suited as a source of vibration for ringing in portable electronic equipment, such as portable communications equipment terminals, which require smaller size and conservation of space for the various parts.

## Claims

1. A small motor for use in a portable communications electronic terminal, the small motor having an eccentric weight attached to the rotor shaft and having a motor holder in which it is held by means of insertion into the insertion opening,
in which small motor there are flexible power feed terminals that feed power to the motor from the circuit board or another external unit, the power-feed terminals being located on the outer periphery of the cylindrical housing case of the motor, such that the fixed ends of the power-feed terminals are positioned centrally along the length of the cylinder from the outward end of the power-feed unit that is fixed and connected to one end of the cylindrical housing case, and the fixed ends are located inward from the free ends and toward the insertion opening end, such that at the time of insertion in the motor holder, the open ends of the power-feed terminals extend outward from the insertion opening end.

2. A small motor as described in claim 1 above, in which there is, on the outside contact face of the free end of the power-feed terminal, a projection to increase the contact pressure against the external board.

3. A small motor as described in claim 1 or 2 above, in which metal plating is applied to at least the free ends of the power-feed terminals, in order to reduce the contact resistance of the power-feed terminals.

4. A motor holder having an insertion opening in which is inserted a small motor as described in any one of claims 1 through 3 above, and having a central cavity that holds that small motor, in which there is at least one insertion part, adjacent to the insertion opening, which contacts the lower, inward side of the power-feed terminals of the motor and forces the power-feed terminals in an upward and outward direction when the small motor is inserted.

5. A motor holder as described in claim 4 above, in which the plug is a part of the side face, and is a slope formed by making the end face of the plug lower than the open end of the power-feed terminal.

6. A motor holder as described in claim 4 or 5 above, in which the motor holder is of an elastic material.

7. A motor holder as described in any one of claims 4 through 6 above, in which the motor holder is of an insulating material.

8. A motor holder as described in any one of claims 4 through 7 above, in which there is on the portion that contacts the free ends a convex part which, when the power-feed terminals of the small motor held by the motor holder are bent inward toward the center, presses the free ends back in the outward direction.
